# EUROPÄISCHE PATENTSCHRIFT

(11) **EP 2 246 545 B1**
(45) Veröffentlichungstag und Bekanntmachung des Hinweises auf die Patenterteilung: **04.01.2012**
(21) Anmeldenummer: 10000957.0
(22) Anmeldetag: 30.01.2010
(51) Int. Cl.: F02D 9/06, F02D 9/16, F02B 37/22, F01N 13/10

(54) **Vorrichtung zur Steigerung der Bremsleistung einer mehrzylindrigen Brennkraftmaschine eines Fahrzeugs während des Motorbremsbetriebes**
Device for increasing the braking power of a multi-cylinder combustion engine of a vehicle during the operation of the engine brake
Dispositif d'augmentation de la puissance au frein d'un moteur à combustion interne multicylindres d'un véhicule pendant le fonctionnement du frein-moteur

(30) Priorität: 29.04.2009 DE 102009019437
(43) Veröffentlichungstag der Anmeldung: 03.11.2010
(73) Patentinhaber: MAN Truck & Bus AG, 80995 München (DE)
(72) Erfinder: Stiermann, Erwin, 86356 Neusäss (DE)

(56) Entgegenhaltungen:
- EP-A1- 1 762 716
- EP-A2- 1 801 392
- US-A1- 2008 000 460

## Beschreibung

Die Erfindung betrifft gemäß dem Oberbegriff des Anspruchs 1 eine Vorrichtung zur Steigerung der Bremsleistung einer mehrzylindrigen Brennkraftmaschine eines Fahrzeugs während des Motorbremsbetriebes.

Der Erfindung liegen gattungsgemäß Brennkraftmaschinen zugrunde, die über eine motorinterne Motorbremsvorrichtung sowie wenigstens einen Abgasturbolader mit einer Abgasturbine und einem Ladeluftverdichter verfügen und außerdem zwei Abgassammelstränge aufweisen, über die das jeweils aus mehreren Zylindern ausgestoßene Abgas gruppenweise zusammengefasst einem Turbineneinlass zuführbar ist. Als Motorbremsvorrichtung sei hier beispielsweise jene aus der EP 0736672 B1 in Verbindung mit einem hierdurch geschützten Motorbremsverfahren bekannte genannt. Dieses hat sich in hunderttausenden von in MAN-Lastkraftwagen und MAN-Omnibussen eingebauten Brennkraftmaschinen bestens bewährt und ist in Fachkreisen als die MAN-EVB (exhaust valve-brake/EVB^{®}) bekannt. Bei diesem Motorbremsverfahren befinden sich während des Motorbremsbetriebes die im Abgasstrang angeordneten Drosselklappen in einer Drosselstellung, in der der zugehörige Abgasstrang nicht vollständig geschlossen ist, so dass die Drosselklappe durch einen randseitig offen bleibenden schmalen Spalt von einem Teil des aufgestauten Abgases passiert werden kann. Dieser Abgas-Schlupf ist notwendig, um ein Blockieren bzw. Abwürgen der Brennkraftmaschine bis zum Stillstand oder ein Überhitzen der Brennkraftmaschine zu verhindern.

Obschon dieses bekannte Motorbremsverfahren hervorragende Bremsleistungen erbringt, ergibt sich für manche Anwendungsfälle der Wunsch nach einer Bremsleistungssteigerung während des Motorbremsbetriebes, um die im Fahrzeug vorhandenen weiteren Bremssysteme wie Retarder und Betriebsbremse stärker zu entlasten oder geringer dimensioniert darstellen zu können. Hierzu sind Zusatzmaßnahmen notwendig, mit denen es möglich wird, den Ladedruck während des Motorbremsbetriebes anzuheben, so dass sich deutlich höhere Abgasgegendrücke einstellen.

Zur Erzielung einer solchen Ladedruckerhöhung für Bremsleistungssteigerung sind bereits verschiedene Vorrichtungen und Methoden bekannt, auf die nachfolgend näher eingegangen ist.

Aus der EP 1762716 A1 ist es bekannt, von dem mittels der Drosselklappen absperrbaren Bereich der Abgaskrümmer wenigstens eine Bypassleitung abzuzweigen, mit der die Drosselklappe umgehbar ist und die in die Turbine hineinführt und dort einen Teil des aufgestauten Abgases auf das Turbinenrad des Turboladers leitet. Es ist dort nur eine Schwarz-Weiß-Schaltung vorgesehen, das heißt, wenn sich die Drosselklappen in beiden Abgassträngen in Absperrposition befinden, sind die beiden Bypassleitungen freigeschaltet, und wenn sich die Absperrklappen in Durchlassstellung befinden, kann kein Abgas in die Bypassleitungen gelangen.

Eine weitaus anspruchsvollere Lösung, von der die vorliegende Erfindung ausgeht, ist aus der EP 1801392 A2 bekannt. Dort kommunizieren die Bypassleitungen jeweils mit einer turbinenwandinternen Düsenbohrung und jede Bypassleitung ist zudem durch ein steuerbares Ventil absperrbar oder auf Durchlass einstellbar. Jedes dieser beiden Steuerventile benötigt einen eigenen Stellmotor mit entsprechender Energieversorgung und zugehöriger elektronischer Steuerung. Ebenso benötigen die beiden Drosselklappen einen eigenen Stellmotor mit zugehöriger Energieversorgung und elektronischer Steuerung. Dieser Aufwand an Steuermitteln zur Erzielung der gewünschten Motorbremsleistungssteigerung ist vergleichsweise hoch.

Es ist demgegenüber Aufgabe der Erfindung, eine Vorrichtung der gattungsgemäßen Art dahingehend umzugestalten, dass sich der Bau- und Steuerungsmittelaufwand erheblich reduziert.

Diese Aufgabe ist erfindungsgemäß durch einen im Kennzeichen des Anspruchs 1 in Einzelheiten näher beanspruchten Drehschieber gelöst.

Vorteilhafte Ausgestaltungen und Weiterbildungen des erfindungsgemäßen Drehschiebers sind in den Unteransprüchen angegeben.

Entsprechend der Erfindung sind dabei die im Fall der EP 1801392 A2 vorhandenen beiden Abgassammelstrang-Absperrorgane (Drosselklappen) und die beiden Bypassleitungs-Steuerorgane (Steuerventile) funktional und konstruktiv zusammengefasst durch einen Drehschieber realisiert. Bei diesem Drehschieber handelt es sich um ein relativ einfaches Bauteil, das nur einen einzigen Stellmotor mit zugehöriger elektronischer Steuerung benötigt und auch einfach an einer geeigneten Stelle im Abgasstrom stromauf der Turbinenkammer in eine Lagerbohrung eines Gehäuses einbaubar ist. Von der gehäuseintemen, den Drehschieber aufnehmbaren Lagerbohrung zweigen die beiden Bypassleitungen seitlich ab. Außerdem weist der Drehschieber eine periphere Steuerkulisse auf, mit der in verschiedenen EinstellpositionenNerdrehstellungen des Drehschiebers wenigstens folgende Schaltzustände herbeiführbar sind, nämlich
a) während eines Motorbremsbetriebes beide Abgasstränge/Abgasströme absperrbar und gleichzeitig die Eintrittsquerschnitte beider Bypassleitungen vollständig oder partiell freigebbar sind, und
b) während des Motornormalbetriebes beide Abgasstränge/Abgasströme auf Durchlass geschaltet und gleichzeitig die beiden Bypassleitungen abgesperrt sind.

Je nach Ausgestaltung des Drehschiebers sowie Lage und Größe der Eintritte der Bypassleitungen im Bereich der Lagerbohrung können auch verfeinerte und/oder weitere Steuerfunktionen mit dem erfindungsgemäßen Drehschieber realisiert werden. In diesem Zusammenhang kann die periphere Steuerkulisse am Drehschieber eine solche Anordnung und Bogenlänge aufweisen und können die Bypassleitungen mit ihren Eintrittsquerschnitten an solchen Stellen und mit solcher Größe von der Aufnahmebohrung im Drehschieber-Gehäuse abzweigen, dass mittels des Drehschiebers in dessen verschiedenen Einstellpositionen folgende Schaltzustände herbeiführbar sind, nämlich
a) im Motorbremsbetrieb
   a1) jeder Abgasstrang entweder
      a11) vollständig abgesperrt ist, oder
      a12) für partiellen Durchlass freigegeben ist,
   a2) der Eintrittsquerschnitt jeder Bypassleitung bei gleichzeitig abgesperrten Abgassträngen entweder
      a21) vollständig freigegeben ist, oder
      a22) in geregelter Weise für eine Bremsleistungsbeeinflussung partiell mehr oder weniger stark freigegeben ist,
   und
b) im Motornormalbetrieb
   b1) jeder Abgasstrang entweder
      b11) auf vollen Durchlass freigegeben ist oder
      b12) für Turboladerbeschleunigungen in geregelter Weise auf partiellen Durchlass eingestellt ist, und
   b2) der Eintrittsquerschnitt jeder Bypassleitung entweder
      b21) während der Betriebsstellungen b11) und b12) vollständig absperrt ist, oder
      b22) während der Betriebsphase b12) partiell freigegeben ist.

Der Drehschieber selbst kann an verschiedenen Stellen der beiden Abgasströme zwischen den Motorauslässen und der Turbinenkammern der Abgasturbine angeordnet sein.

So ist es möglich, das den Drehschieber in seiner Lagerbohrung aufnehmende Gehäuse am turbinenseitigen Endbereich der Abgasstränge nahe zu einem Anschlussflansch hin auszubilden, mit welchem gemeinsamen Anschlussflansch die beiden dort zueinander benachbarten Abgasstränge an einem entsprechenden Anschlussflansch am Turbinengehäuse anflanschbar sind.

Alternativ hierzu ist es möglich, das den Drehschieber in seiner Lagerbohrung aufnehmende Gehäuse im entsprechend verlängerten Einlassbereich des Turbinengehäuses auszubilden, an dessen äußeren Anschlussflansch die beiden Abgasstränge über einen daran endseitig gegebenen gemeinsamen Anschlussflansch angeflanscht sind.

In einer weiteren Alternative ist es auch möglich, den Drehschieber im Bereich zwischen Turbineneingang und dem dortigen Abgasstrangende vorzusehen. Dabei weist das den Drehschieber in seiner Lagerbohrung aufnehmende Drehschiebergehäuse zwei mit den beiden Abgassträngen und dem turbineneinlassseitigen Einlasskanal bzw. den Einlasskanälen der Abgasturbine kommunizierende Abgasdurchlasskanäle sowie abgasstrangseitig und turbineneinlassseitig je einen Anschlussflansch auf, über welche Anschlussflansche das Drehschiebergehäuse zwischen einen abgasstrangendseitig und turbineneinlassseitig gegebenen Anschlussflansch eingebaut ist.

Vorzugsweise ist die Lage des Drehschiebers derart, dass die Achse des Drehschiebers in einer durch das Zentrum der beiden in ihrem turbinenseitigen Endbereich zueinander benachbarten und parallel verlaufenden Abgasstränge und des anschließenden Turbineneinlasses gehenden Ebene oder eine hierzu parallelen Ebene angeordnet ist.

Der Drehschieber selbst ist vorzugsweise wie nachfolgend angegeben ausgebildet und angeordnet. Er weist dabei eine Zentralachse und koaxial fest daran zwei seitliche, runde Begrenzungsscheiben und dazwischen eine runde Trennscheibe auf. Dabei erstreckt sich zwischen der Trennscheibe zu jeder der beiden Begrenzungsscheiben hin die periphere Steuerkulisse des Drehschiebers, wobei die äußere Bogenfläche der Steuerkulisse zu den radialen Außenflächen der Begrenzungsscheiben und der hierzu vorzugsweise durchmessergleichen Trennscheibe fluchtet. Die Trennscheibe trennt dabei innerhalb der Aufnahmebohrung für den Drehschieber die beiden das Drehschiebergehäuse durchfließenden Abgasströme. Vorzugsweise sind die Begrenzungsscheiben jeweils in einer Ausbuchtung des Drehschiebergehäuses angeordnet, wovon die eine entweder in einem auf einer Seite den axialen Abschluss der Lagerbohrung bildenden Gehäuseboden oder Lagerdeckel ausgebildet ist und die andere in einem auf der anderen Seite den Abschluss der Lagerbohrung bildenden Lagerdeckel ausgebildet ist. Die rotatorische Lagerung des Drehschiebers kann dabei entweder über die in den Ausbuchtungen aufgenommenen Begrenzungsscheiben oder über seine Zentralachse erfolgen. In letzterem Fall überragt die Zentralachse die Begrenzungsscheiben jeweils außen und ist einenendes in einer Sacklochlagerbohrung des Bodens bzw. Lagerdeckels gelagert und andererseits in einer Durchgangsbohrung des Lagerdeckels gelagert sowie durch diese hindurch aus dem Drehschiebergehäuse heraus verlängert und außerhalb des letzten über entsprechende Koppelungsorgane mit einem Stellantrieb für den Drehschieber verbunden.

Jede der Bypassleitungen zweigt von der Aufnahmebohrung für den Drehschieber vorzugsweise im Bereich zwischen Trennscheibe und äußerer Begrenzungsscheibe ab.

Entsprechend einer Ausführungsform kommuniziert jede Bypassleitung mit einer Düsenbohrung, die in einer Turbinenwand der Abgasturbine ausgebildet ist, wobei die Düsenbohrungen entweder
a) partiell nebeneinander verlaufend und über je einen zum anderen benachbarten Austritt, oder
b) in spitzem Winkel zueinander verlaufend sowie ineinander übergehend und dann einen gemeinsamen Austritt
tangential auf den Außenbereich des Turbinenrades gerichtet in die Turbinenkammer ausmünden.

Dabei können die beiden Düsenbohrungen in einer zur Achse des Turbinenrades senkrechten Ebene in einer die Turbinenkammer unterteilenden Leitwand ausgebildet sind.

Auch hinsichtlich anderer Abschnitte der Bypassleitungen und deren Verlauf gibt es verschiedene Ausführungsmöglichkeiten.

So kann jede Bypassleitung über ein extern des Drehschiebergehäuses angeordnetes Leitungsstück mit der anschließenden zugehörigen Düsenbohrung kommunizieren.

Alternativ hierzu kann jede der beiden Bypassleitungen mit ihrer endseitigen Düsenbohrung durch eine lineare Bohrung gebildet sein, welche Bohrungen in einem Wandvorsprung ausgebildet sind, die den Drehschieber aufnehmende Lagerbohrung randseitig tangential durchqueren und eingangsseitig zur Vermeidung eines Abgasaustritts durch Verschlussstopfen verschlossen sind.

Der Drehschieber ist mittelbar über geeignete Organe an eine Stellvorrichtung wie einen elektrischen oder elektropneumatischen Stellmotor angekoppelt und mittels diesem in verschiedene Einstellpositionen verdrehbar. Seine Steuerbefehle erhält der Stellmotor von einer Steuerelektronik.

Weitere Details der Erfindung und verschiedene Ausführungsformen derselben sind nachfolgend anhand der Zeichnung noch näher erläutert. In der Zeichnung zeigen:

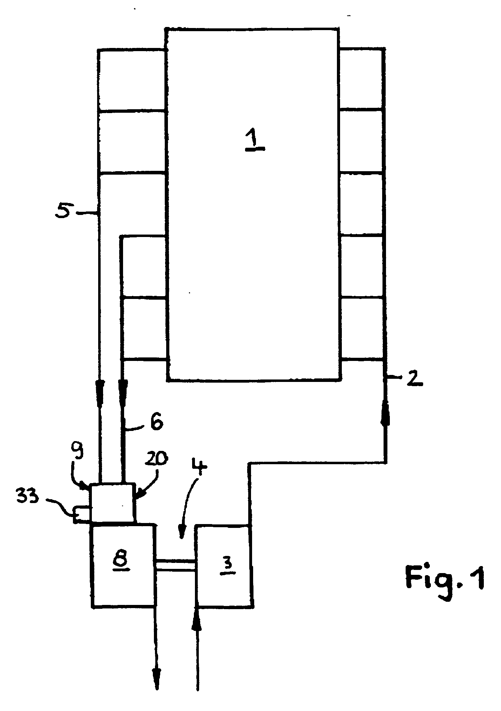

- Fig. 1: schematisch eine mehrzylindrige Brennkraftmaschine mit Abgasturbolader und erfindungsgemäßer Vorrichtung,
- Fig. 2: einen Querschnitt durch eine erste Ausführungsform der erfindungsgemäßen Vorrichtung,
- Fig. 3: eine Ansicht der Vorrichtung von Fig. 2 aus Sicht des Pfeils A,
- Fig. 4: einen Schnitt durch die erste Ausführungsform der erfindungsgemäßen Vorrich- tung in Abgasdurchlasseinstellung,
- Fig. 5: den Schnitt durch die erste Ausführungsform der erfindungsgemäßen Vorrich- tung, diese dabei in Abgassperrposition befindlich,
- Fig. 6: einen partiellen Längsschnitt durch eine Abgasturbine mit einem weiteren Aus- führungsbeispiel der Erfindung,
- Fig. 7: einen Schnitt durch die Darstellung von Fig. 6 entlang der Schnittlinie B-B,
- Fig. 8: verkleinert und nur partiell dargestellt die Darstellung von Fig. 6,
- Fig. 9: verkleinert und nur partiell dargestellt die Abgasturbine von Fig. 6 mit alternativer Ausgestaltung und Anordnung der erfindungsgemäßen Vorrichtung (nicht voll- ständig gezeigt),
- Fig. 10: den Teil der erfindungsgemäßen Vorrichtung von Fig. 9 in Alleindarstellung,
- Fig. 11: eine Alternative zur Bauart der erfindungsgemäßen Vorrichtung von Fig. 6,
- Fig. 12: eine weitere Alternative zur Bauart der erfindungsgemäßen Vorrichtung von Fig. 6,
- Fig. 13: einen Längsschnitt durch eine Abgasturbine mit einer weiteren Ausführungsform der erfindungsgemäßen Vorrichtung, und
- Fig. 14: eine Ansicht der Ausführungsform der erfindungsgemäßen Vorrichtung gemäß Fig. 13 aus Sicht des Pfeils C.

In den einzelnen Figuren sind gleiche bzw. einander entsprechende Bauteile oder Teile davon des besseren Verständnisses wegen mit gleichem Bezugszeichen angegeben.

Die erfindungsgemäße Vorrichtung ist einer mehrzylindrigen Brennkraftmaschine 1, insbesondere Dieselmotor, eines Fahrzeugs zugeordnet, bei dem es sich um ein beliebiges motorbetriebenes Landfahrzeug, wie Lastkraftwagen, Omnibus oder sonstiges Nutzfahrzeug, aber auch einen Pkw, ein Schienenfahrzeug oder ein Wasserfahrzeug handeln kann.

Die Zylinder bzw. Brennräume der Brennkraftmaschine 1 kommunizieren über gesteuerte Einlassventile und anschließende Einlasskanäle mit einer Ladeluftleitung 2, die vom Verdichter 3 eines Abgasturboladers 4 mit verdichteter Ladeluft versorgbar ist. Die Zylinder bzw. Brennräume der Brennkraftmaschine 1 kommunizieren außerdem über gesteuerte Auslassventile und anschließende Auslasskanäle gruppenweise zusammengefasst mit jeweils einem von zwei Abgassammelsträngen 5, 6. Über jeden dieser beiden Abgassammelstränge 5, 6, bei denen es sich auch um Abgaskrümmer handeln kann, ist das Abgas aus der angeschlossenen Gruppe von Zylindern einem Einlass 7 einer Abgasturbine 8 des Abgasturboladers 4 zuführbar.

Die Brennkraftmaschine 1 verfügt über eine motorinterne Motorbremsvorrichtung, z. B. eine solche wie eingangs der Beschreibung erwähnt und aus der EP 0736672 B1 bekannt. Jeder von der Brennkraftmaschine 1 zur Abgasturbine 8 hinführende Abgassammelstrang 5 bzw. 6 ist während eines Motorbremsbetriebes durch ein Absperrorgan 10, 11 vollständig absperrbar. Darüber hinaus ist der Brennkraftmaschine 1 eine Vorrichtung 9 zur Steigerung ihrer Bremsleistung während eines Motorbremsbetriebes zugeordnet. Diese beinhaltet folgende Mittel. Vom absperrbaren Bereich jedes Abgassammelstranges 5, 6 zweigt eine durch ein Steuerorgan 12, 13 auf- und zusteuerbare Bypassleitung 14, 15 ab, deren in einer Turbinengehäusewand 16 nach Art einer Düsenbohrung 14', 15' ausgebildeter Endbereich zumindest annähernd tangential auf den Außenbereich des Turbinenrades 17 gerichtet in die Turbinenkammer 18 ausmündet. Somit sind während eines Motorbremsbetriebes aus dem in den abgesperrten Abgassammmelsträngen 5, 6 aufgestauten Abgas über die von den Steuerorganen 12, 13 freigegebenen Bypassleitungen 14, 15 zwei Abgasteilströme abzweigbar, die dann über die Düsenbohrungen 14', 15' entweder in Form von zwei getrennten Abgasstrahlen oder zu einem Abgasstrahl vereinigt mit hohem Druck und hoher Geschwindigkeit auf die Laufschaufeln des Turbinenrades 17 treffen, wodurch der Abgasturbolader 4 beschleunigt antreibbar sowie hieraus resultierend vom Verdichter 3 komprimierte Luft über die Ladeluftleitung 2 den Brennräumen der Brennkraftmaschine 1 zuführbar ist, die darin dann bremsleistungssteigernd wirksam ist.

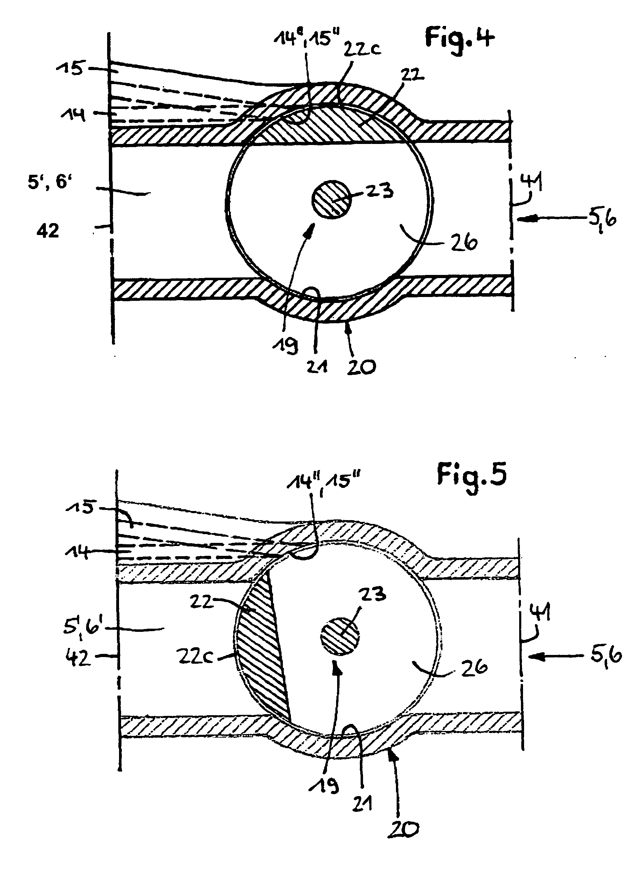

Erfindungsgemäß sind die beiden Abgasstrang-Absperrorgane 10, 11 und die beiden Bypassleitungs-Steuerorgane 12, 13 funktional und konstruktiv an einen Drehschieber 19 zusammengefasst realisiert. Dieser ist in einem Drehschiebergehäuse 20, dort in einer entsprechenden Lagerbohrung 21 rotatorisch verdrehbar aufgenommen. Das Drehschiebergehäuse 20 ist dabei in einem stromauf der Turbinenkammer 18 gegebenen Abschnitt des zur Turbine 8 hinführenden Abgasstromes angeordnet, wobei die verschiedenen möglichen Lagen und Ausgestaltungen nachfolgend in Verbindung mit den Ausführungsbeispielen erläutert sind. Innerhalb des Drehschiebergehäuses 20 zweigen von der dortigen, den Drehschieber 19 aufnehmenden Lagerbohrung 21 die beiden Bypassleitungen 14, 15 seitlich ab. Der Drehschieber 19 weist eine periphere Steuerkulisse 22 auf, mit der die Funktionen der beiden Abgasstrang-Absperrorgane 10, 11 und der beiden Bypassleitungs-Steuerorgane 12, 13 darstellbar und in verschiedenen, durch rotatorische Verdrehung des Steuerschiebers 19 einnehmbaren Einstellpositionen wenigstens folgende Schaltzustände herbeiführbar sind, nämlich
a) während eines Motorbremsbetriebes beide Abgassammelstränge 5, 6 absperrbar und gleichzeitig die Eintrittsquerschnitte 14", 15" der beiden Bypassleitungen 14, 15 vollständig oder partiell freigebbar sind (siehe Fig. 5, 6, 8-12, 13), und
b) während des Motornormalbetriebes beide Abgassammelstränge 5, 6 auf Durchlass geschaltet und gleichzeitig die Bypassleitungen 14, 15 abgesperrt sind (siehe Fig. 4).

Nachfolgend ist auf Einzelheiten der erfindungsgemäßen Vorrichtung näher eingegangen.

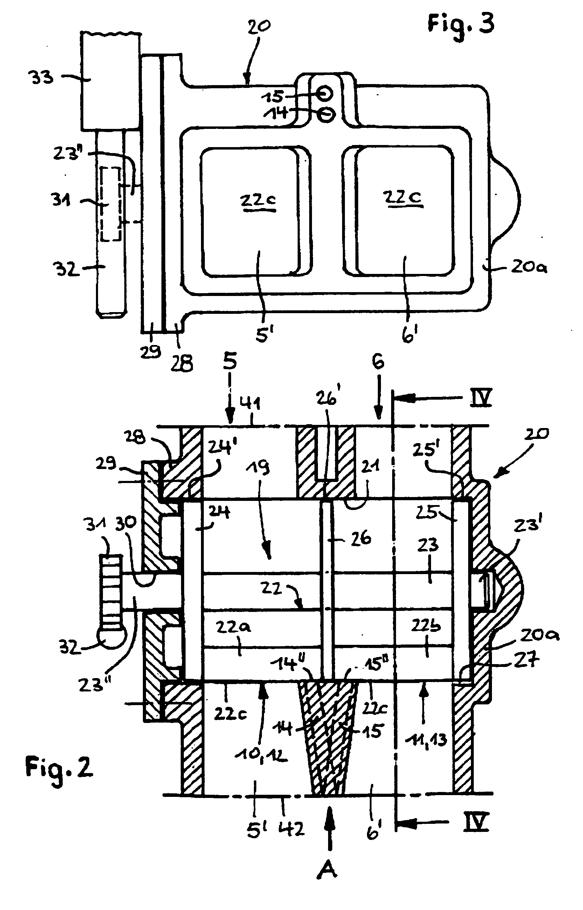

Der Drehschieber 19 ist in allen in der Zeichnung dargestellten Ausführungsbeispielen im Wesentlichen gleich ausgestaltet. Der Drehschieber 19 weist - wie aus der Schnittdarstellung von Fig. 2 ersichtlich - eine Zentralachse 23 und jeweils koaxial fest daran angeordnet zwei runde seitliche Begrenzungsscheiben 24, 25 und etwa mittig dazwischen eine runde Trennscheibe 26 auf. Die Trennscheibe 26 dient dazu, zwei innerhalb des Drehschiebergehäuses 20 ausgebildete Abgasdurchlasskanäle 5', 6' strömungsmäßig zu separieren, die von der den Drehschieber 19 aufnehmenden Lagerbohrung 21 quer durchdrungen werden. Zwischen der Trennscheibe 26 und jeder der Begrenzungsscheiben 24, 25 erstreckt sich die periphere Steuerkulisse 22 mit Teilstücken 22a, 22b, wobei die radialen Außenflächen 24', 25' der Begrenzungsscheiben 24, 25, sowie 26' der Trennscheibe und 22c der Steuerkulisse 22 zueinander fluchten. Von den beiden Begrenzungsscheiben 24, 25 kann die eine (25) entweder in einem die Lagerbohrung 21 axial einenendes begrenzenden Boden 20a des Drehschieber-Gehäuses 20 oder einem Deckel ausgebildeten Ausbuchtung 27 mit rotatorischem Spiel aufgenommen sein. Die gegenüberliegende Begrenzungsscheibe (24) ist in der Lagerbohrung 21 im Bereich einer Gehäusewandausbuchtung 28 mit Drehspiel gelagert und axial außen an einem die Lagerbohrung 21 diesseitig abschließenden Deckel 29 abgestützt. Der Drehschieber 19 ist mit seiner Zentralachse 23 einenendes mit einem die Begrenzungsscheibe 25 überragenden Abschnitt 23' in einer im Boden bzw. Deckel 20a ausgebildeten Sacklochbohrung gelagert. Axial gegenüber ist der Drehschieber 19 mit seiner Zentralachse 23 in einer Durchgangsbohrung 30 im Deckel 29 gelagert. Außerhalb des Drehschiebergehäuses 20 ist der Drehschieber 19 mit dem heraus verlängerten Abschnitt 23" der Zentralachse 23 über geeignete Koppelorgane 31, 32 mit einem Stellantrieb bzw. Stellmotor 33 verbunden.

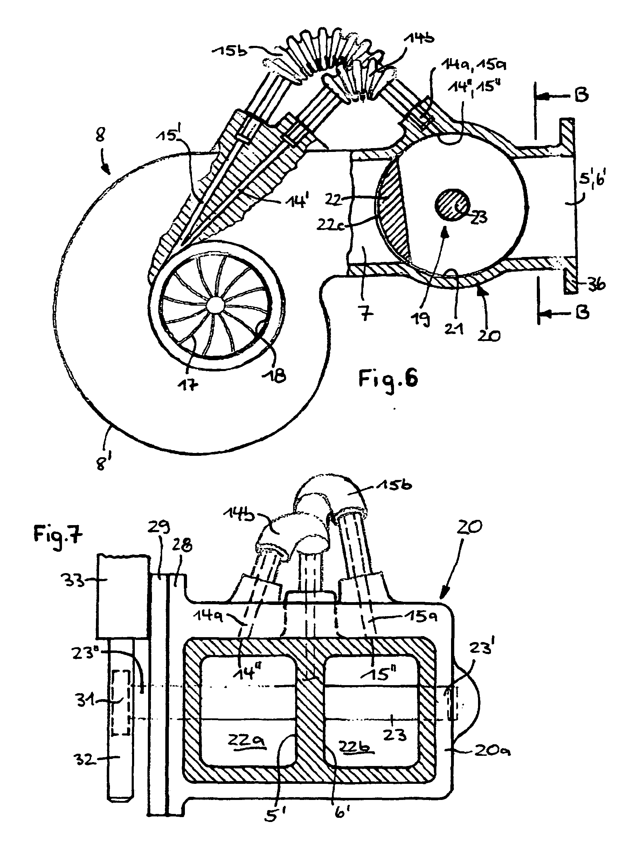

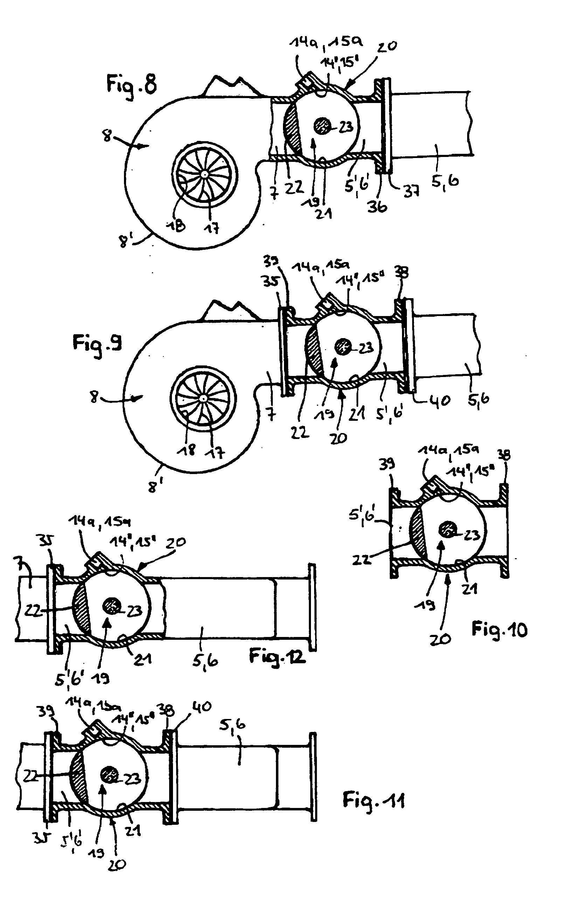

Das den Drehschieber 19 in seiner Lagerbohrung 21 aufnehmende Drehschiebergehäuse 20 kann im Abgasstrom zwischen Brennkraftmaschine und Turbinenkammer 18 der Abgasturbine 8 an verschiedenen alternativen Stellen angeordnet bzw. ausgebildet sein.
Beispielsweise kann das Drehschiebergehäuse 20 am turbinenseitigen Endbereich der Abgassammelstränge 5, 6 z. B. einstückig mit diesem durch Gießen nahe zu einem gemeinsamen Anschlussflansch 34 hin gerückt ausgebildet sein, mit welchem gemeinsamen Anschlussflansch 34 die beiden kurz davor zueinander benachbarten und in diesen Abschnitten weitgehend parallel zueinander verlaufenden Abgassammelstränge 5, 6 an einem entsprechenden Anschlussflansch 35 am Einlass 7 des Turbinengehäuses 8' anflanschbar sind (siehe z. B. Fig. 12).
Alternativ hierzu kann das Drehschiebergehäuse 20 im entsprechend verlängerten Einlassbereich 7 des Turbinengehäuses 8' z. B. einstückig mit diesem durch Gießen ausgebildet sein, an dessen äußerem Anschlussflansch 36 die beiden Abgassammelstränge 5, 6 über einen daran endseitig gegebenen gemeinsamen Anschlussflansch 37 anflanschbar sind (siehe z. B. Fig. 6, 7, 8, 13, 14).
In einer weiteren Alternative kann das Drehschiebergehäuse 20 als eigenständiges, z. B. durch Gießen hergestelltes Bauteil ausgebildet sein, das die beiden mit den Abgassammelsträngen 5, 6 und dem Turbineneinlass 7 kommunizierenden Abgasdurchlasskanäle 5', 6' und die Drehschieber-Aufnahmebohrung 21 sowie abgasstrangseitig und turbineneinlassseitig jeweils einen Anschlussflansch 38 bzw. 39 aufweist, über welche Anschlussflansche 38, 39 das Drehschiebergehäuse 20 zwischen einen abgasstrangendseitig und turbineneinlasseingangsseitig gegebenen Flansch 40 bzw. 35 einbaubar ist (siehe z. B. Fig. 9, 10, 11).
Die einzelnen Ausführungsmöglichkeiten für das Drehschiebergehäuse 20 und damit auch die Anordnung des Drehschiebers 19 im Abgasstrom sind in den Figuren 8 bis 12 basierend auf der Ausführungsform der erfindungsgemäßen Vorrichtung gemäß Fig. 6 und 7 aufgezeigt. Die drei vorgenannten Ausführungsmöglichkeiten für die Anordnung und Ausbildung des Drehschiebegehäuses 20 einschließlich integriertem Drehschieber 19 lassen sich analog zu den Darstellungen der Figuren 8 bis 12 auch auf die beiden anderen in der Zeichnung in Figuren 2 bis 5 und 13, 14 darstellen. Insofern ist in den Fig. 2, 4 und 5 der ersten Ausführungsform die Eingangsseite und Ausgangsseite des Drehschiebergehäuses 20 nur durch strichpunktierte Linien 41, 42 markiert.

Innerhalb des Drehschiebergehäuses 20 ist die Rotationsachse des Drehschiebers 19 in einer durch das Zentrum der beiden in ihrem turbinenseitigem Endbereich zueinander benachbart und zumindest annähernd parallel verlaufenden Abgasstränge 5, 6 und des anschließenden Turbineneinlasses 7 gehenden Ebene oder einer hierzu parallelen Ebene angeordnet.

Wie die einzelnen Ausführungsbeispiele zeigen, können sowohl die Bypassleitungen 14, 15 als auch deren austrittsseitige Düsenbohrungen 14', 15' in unterschiedlicher Weise ausgestaltet und angeordnet sein.

Grundsätzlich zweigt jede der Bypassleitungen 14, 15 innerhalb des Drehschiebergehäuses 20 von der den Drehschieber 19 aufnehmenden Lagerbohrung 21 im Bereich zwischen Trennscheibe 26 und äußerer Begrenzungsscheibe 24, 25 ab, so dass in entsprechender Einstellung des Drehschiebers 19 (siehe z. B. Fig. 5, 6, 8-12, 13) eine Kommunikation der Bypassleitungen 14, 15 mit den Abgasdurchlasskanälen 5', 6' möglich bzw. hergestellt ist. Jede Bypassleitung 14, 15 kommuniziert mit einer Düsenbohrung 14', 15', die im Gehäuse 8' der Abgasturbine 8 in einer Turbinenwand (z. B. 16) ausgebildet ist. Dabei können die Düsenbohrungen 14', 15' entweder
a) achsparallel nebeneinander verlaufend und über je einen zum anderen benachbarten Austritt 14"', 15"', oder
b) in einem spitzen Winkel zueinander verlaufend sowie ineinander übergehend und dann einen gemeinsamen Auftritt
tangential auf den Außenbereich des Turbinenrades 17 gerichtet in die Turbinenkammer 18 ausmünden.

Im Fall der Ausführungsbeispiele gemäß Fig. 2 bis 5, 6 und 7, 8 bis 12 verlaufen die Düsenbohrungen in einer im Wesentlichen senkrecht zur Rotationsachse des Turbinenendes 17 stehenden Ebene und sind in einer die beiden Turbineneinlasskanäle 7a, 7b voneinander trennenden Leitwand 16 ausgebildet.

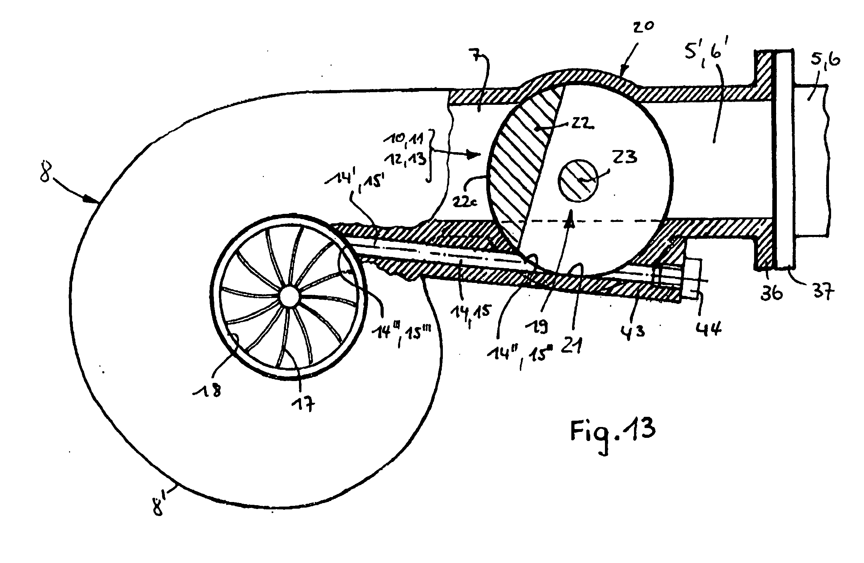

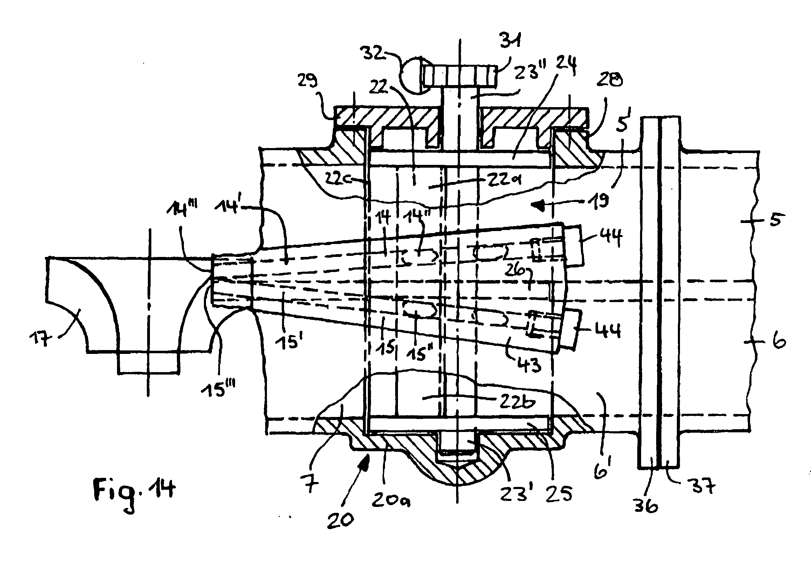

Beim Ausführungsbeispiel gemäß Fig. 13, 14 dagegen liegen die Düsenbohrungen 14', 15' in einer Ebene, die sich etwa parallel zur Rotationsachse des Turbinenrades 17 erstreckt.

Die Düsenbohrungen 14', 15' selbst können entweder zylindrisch oder zum jeweiligen Austritt 14"' bzw. 15"' hin leicht konisch ausgebildet sein. Beide Düsenbohrungen 14', 15' sind vorzugsweise gleich ausgebildet, könnten gegebenenfalls aber auch mit unterschiedlichen Durchmessern oder Konuswinkeln realisiert sein.

Jede Bypassleitung 14, 15 kann, wie die Ausführungsbeispiele gemäß Fig. 6, 7 sowie 8 bis 12 zeigen, aus einem ersten drehschiebergehäuseinternen Abschnitt 14a, 15a und einem extern des Drehschiebergehäuses 20 angeordneten, z. B. durch ein gebogenes oder gekrümmtes Leitungsstück 14b, 15b bestehen, das mit der anschließenden Düsenbohrung 14', 15' kommuniziert.

Alternativ hierzu kann jede der beiden Bypassleitungen 14, 15 durch eine Bohrung im Drehschiebergehäuse 20 gebildet sein - siehe die Ausführungsform gemäß Fig. 2 bis 5 -, die entweder direkt mit der zugehörigen turbinenwandinternen Düsenbohrung 14' bzw. 15' kommuniziert oder abschnittsweise zunächst noch in eine Turbinenwand, z. B. 16, des Turbinengehäuses 8' hineinverlängert ist und erst dann mit der nachfolgend ausgebildeten Düsenbohrung 14' bzw. 15' kommuniziert.

In einer weiteren Alternative - siehe Fig. 13, 14 - ist jede der beiden Bypassleitungen 14, 15 mit ihrer endseitigen Düsenbohrung 14' bzw. 15' durch eine lineare Bohrung gebildet. Diese Bohrungen sind in einem Wandvorsprung 43 ausgebildet, der sich außen am Drehschiebergehäuse 20 bis zur Außenseite des Turbinengehäuses 8' hin erstreckt. Die besagten Bohrungen durchqueren innerhalb des Drehschiebergehäuses 20 die den Drehschieber 19 aufnehmende Lagerbohrung 21 randseitig tangential, münden turbinenseitig in die Turbinenkammer 18 aus und sind eingangsseitig durch Verschlussstopfen 44 verschlossen.

Es ist selbstredend möglich, die einzelnen Teile der erfindungsgemäßen Vorrichtung auch anders als in den aufgezeigten Ausführungsbeispielen darzustellen, soweit sich diese im Rahmen des erfindungsgemäßen Grundprinzips erstrecken.

In diesem Zusammenhang sei insbesondere die Art der Steuerkulisse 22 am Drehschieber 19 sowie die Lage und Größe der Eintrittsquerschnitte 14", 15" der Bypassleitungen 14, 15 erwähnt, weil damit Einfluss auf die Funktionalität der erfindungsgemäßen Vorrichtung nehmbar ist.

So kann die periphere Steuerkulisse 22 mit ihrer peripheren Außenfläche 22c am Drehschieber 19 eine solche Anordnung und Bogenlänge aufweisen und können die Bypassleitungen 14,15 mit bestimmten Eintrittsquerschnitten 14", 15" an solchen Stellen und mit solcher Größe von der den Drehschieber 19 aufnehmenden Lagerbohrung 21 abzweigen, dass mittels des Drehschiebers 19 in dessen verschiedenen Einstellpositionen folgende Schaltzustände herbeiführbar sind, nämlich
a) im Motorbremsbetrieb
   a1) jeder Abgasstrang 5, 6 entweder
      a11) vollständig abgesperrt ist, oder
      a12) für partiellen Durchlass freigegeben ist, und
   a2) der Eintrittsquerschnitt 14", 15" jeder Bypassleitung 14, 15 bei gleichzeitig abgesperrten Abgassammelsträngen 5, 6, 5', 6' entweder
      a21) vollständig freigegeben ist, oder
      a22) nur partiell mehr oder weniger stark freigegeben ist, um auf geregelte Weise eine Bremsleistungsbeeinflussung herbeizuführen, und
b) im Motornormalbetrieb
   b1) jeder Abgassammelstrang 5, 6, 5', 6' entweder
      b11) auf vollen Durchlass freigegeben ist, oder
      b12) für Turboladerbeschleunigungen in geregelter Weise auf partiellen Durchlass - eine Art Venturidüse bildend - eingestellt ist, und
   b2) der Eintrittsquerschnitt 14", 15" jeder Bypassleitung entweder
      b21) während der Betriebsstellungen b11) und b12) vollständig abgesperrt ist, oder
      b22) während der Betriebsphase b12) partiell freigegeben ist.

Der Drehschieber 19 wird vom Stellmotor 33 her in seine einzelnen Schaltpositionen eingestellt. Der Stellmotor 33 kann durch einen elektropneumatischen oder elektrischen Stellmotor realisiert sein. Der Stellmotor 33 erhält seine Steuerbefehle von einer Steuerelektronik, bei der es sich um ein selbstständiges Gerät oder um einen Bordcomputer oder den Fahrzeugführungsrechner des Fahrzeugs handeln kann. Die Steuerelektronik erhält eine Vielzahl von aktuellen Fahrbetriebs- und Motorbetriebsparametern einschließlich fahrerseitig eingesteuerten Brems- und Beschleunigungssignalen zugeführt und verarbeitet diese Istwerte per Programm anhand eingespeicherter Sollwerte zu entsprechenden Stellbefehlen für den Stellmotor 33, damit der Drehschieber 19 in die betriebsbedingt erforderlichen Einstellpositionen gebracht werden kann.

Grundsätzlich bleibt festzuhalten, dass mit der erfindungsgemäßen Vorrichtung auf vergleichsweise einfache und kostengünstige Weise eine signifikante Bremsleistungssteigerung erzeugbar ist.

## Patentansprüche

1. Vorrichtung zur Steigerung der Bremsleistung einer mehrzylindrigen Brennkraftmaschine (1) eines Fahrzeugs während des Motorbremsbetriebes, die eine motorinterne Motorbremsvorrichtung, wenigstens einen Abgasturbolader (4) mit einer Abgasturbine (8) und einem Ladeluftverdichter (3) sowie zwei Abgassammelstränge (5, 6) aufweist, über die jeweils das aus mehreren Zylindern ausgestoßene Abgas gruppenweise zusammengefasst der Abgasturbine (8) über deren Einlass (7; 7a, 7b) zuführbar ist, wobei jeder Abgassammelstrang (5, 6) während eines Motorbremsbetriebes durch ein Absperrorgan (10, 11) vollständig absperrbar ist, ferner vom absperrbaren Bereich jedes Abgassammelstranges (5, 6) eine durch ein Steuerorgan (12, 13) auf- und zusteuerbare Bypassleitung (14, 15) abzweigt, deren in einer Turbinengehäusewand nach Art einer Düsenbohrung (14', 15') ausgebildeter Endbereich zumindest annähernd tangential auf den Außenbereich des Turbinenrades (17) gerichtet in die Turbinenkammer (18) ausmündet, somit während eines Motorbremsbetriebes aus dem in den abgesperrten Abgassammelsträngen (5, 6) aufgestauten Abgas über die Bypassleitungen (14, 15) zwei Abgasteilströme abzweigbar und diese dann über die Düsenbohrungen (14', 15') entweder in Form von zwei Abgasstrahlen oder zu einem Abgasstrahl vereinigt mit hohem Druck und hoher Geschwindigkeit auf die Laufschaufeln des Turbinenrades (17) treffen und solchermaßen der Turbolader (4) beschleunigt antreibbar sowie hieraus resultierend komprimierte Luft den Brennräumen der Brennkraftmaschine (1) - dort bremsleistungssteigemd wirksam - zuführbar ist, **dadurch gekennzeichnet, dass** die beiden Abgasstrang-Absperrorgane (10, 11) und die beiden Bypassleitungs-Steuerorgane (12, 13) funktional und konstruktiv zusammengefasst durch einen Drehschieber (19) realisiert sind, der in ein stromauf der Turbinenkammer (18) im Abgasstrom angeordnetes Drehschiebegehäuse (20) eingebaut ist, dass von einer gehäuseinternen, den Drehschieber (19) aufnehmenden Lagerbohrung (21) die beiden Bypassleitungen (14, 15) seitlich abzweigen, und dass der Drehschieber (19) eine periphere Steuerkulisse (22, 22c) aufweist, mit der in verschiedenen Einstellpositionen wenigstens folgende Schaltzustände herbeiführbar sind, nämlich
a) während eines Motorbremsbetriebes beide Abgassammelstränge (5, 6, 5', 6') absperrbar und gleichzeitig die Eintrittsquerschnitte (14", 15") beider Bypassleitungen (14, 15) vollständig oder partiell freigebbar sind, und
b) während des Motornormalbetriebes beide Abgassammelstränge (5, 6, 5', 6') auf Durchlass geschaltet und gleichzeitig die beiden Bypassleitungen (14, 15) abgesperrt sind.

2. Vorrichtung nach Anspruch 1, **dadurch gekennzeichnet, dass** die periphere Steuerkulisse (22, 22c) am Drehschieber (19) eine solche Anordnung und Bogenlänge aufweist und dass die Bypassleitungen (14, 15) mit ihren Eintrittsquerschnitten (14", 15") an solchen Stellen und mit solcher Größe von der Aufnahmebohrung (21) für den Drehschieber (19) im Drehschieber-Gehäuse (20) abzweigen, dass mittels des Drehschiebers (19) in dessen verschiedenen Einstellpositionen folgende Schaltzustände herbeiführbar sind, nämlich
a) im Motorbremsbetrieb
a1) jeder Abgassammelstrang (5, 6, 5', 6') entweder
a11) vollständig abgesperrt ist, oder
a12) für partiellen Durchlass freigegeben ist,
a2) der Eintrittsquerschnitt (14", 15") jeder Bypassleitung (14, 15) bei gleichzeitig abgesperrten Abgassammelsträngen (5, 6, 5', 6') entweder
a21) vollständig freigegeben ist, oder
a22) in geregelter Weise für eine Bremsleistungsbeeinflussung partiell mehr oder weniger stark freigegeben sind, und
b) im Motornormalbetrieb
b1) jeder Abgasstrang (5, 6, 5', 6') entweder
b11) auf vollen Durchlass freigegeben ist, oder
b12) für Beschleunigungen des Turboladers (4) in geregelter Weise auf partiellen Durchlass eingestellt ist, und
b2) der Eintrittsquerschnitt (14", 15") jeder Bypassleitung (14, 15) entweder
b21) während der Betriebsstellungen b11) und b12) vollständig abgesperrt ist, oder
b22) während der Betriebsphase b12) partiell freigegeben ist.

3. Vorrichtung nach Anspruch 1, **dadurch gekennzeichnet, dass** das den Drehschieber (19) in seiner Lagerbohrung (21) aufnehmende Drehschieber-Gehäuse (20) am turbinenseitigen Endbereich der Abgassammelstränge (5, 6) nahe zu einem Anschlussflansch (39) hin ausgebildet ist, mit welchen gemeinsamen Anschlussflansch (39) die beiden dort zueinander benachbarten Abgassammelstränge (5, 6) an einem entsprechenden Anschlussflansch (35) am Einlass (7) des Turbinengehäuses (8') anflanschbar sind.

4. Vorrichtung nach Anspruch 1, **dadurch gekennzeichnet, dass** das den Drehschieber (19) in seiner Lagerbohrung (21) aufnehmende Drehschieber-Gehäuse (20) im entsprechend verlängerten Einlassbereich (7) des Turbinengehäuses (8') ausgebildet ist, an dessen äußeren Anschlussflansch (36) die beiden Abgassammelstränge (5, 6) über einen daran endseitig gegebenen gemeinsamen Anschlussflansch (37) angeflanscht sind.

5. Vorrichtung nach Anspruch 1, **dadurch gekennzeichnet, dass** das den Drehschieber (19) in seiner Lagerbohrung (21) aufnehmende Drehschieber-Gehäuse (20) zwei mit den beiden Abgassammelsträngen (5, 6) und dem Turbineneinlass (7) kommunizierende Abgasdurchlasskanäle (5', 6') sowie abgasstrangsseitig und turbineneinlassseitig je einen Anschlussflansch (38, 39) aufweist, über welche Anschlussflansche (38, 39) das Drehschieber-Gehäuse (20) zwischen einem abgasstrangendseitig und turbineneinlassseitig gegebenen Flansch (39, 40) eingebaut ist.

6. Vorrichtung nach einem der vorhergehenden Ansprüche, **dadurch gekennzeichnet, dass** die Rotationsachse des Drehschiebers (19) in einer durch das Zentrum der beiden in ihrem turbinenseitigen Endbereich zueinander benachbart und parallel verlaufende Abgassammelstränge (5, 6) und des anschließenden Turbineneinlasses (7) gehenden Ebene oder einer hierzu parallelen Ebene angeordnet ist.

7. Vorrichtung nach einem der vorhergehenden Ansprüche, **dadurch gekennzeichnet, dass** der Drehschieber (19) eine Zentralachse (23) sowie koaxial fest daran angeordnet zwei seitliche Begrenzungsscheiben (24, 25) und dazwischen eine Trennscheibe (26) aufweist, die innerhalb der Lagerbohrung (21) für den Drehschieber (19) den einen vom anderen Abgasstrom (5, 6, 5', 6') trennt, wobei sich zwischen der Trennscheibe (26) und jeder der Begrenzungsscheiben (24, 25) die periphere Steuerkulisse (22) des Drehschiebers (19) mit einem Teilabschnitt (22a, 22b) erstreckt und dabei die äußere Bogenfläche (22c) der Steuerkulisse (22) zu den radialen Außenflächen (24', 25') der Begrenzungsscheiben (24, 25) und der radialen Außenfläche (26') der hierzu durchmessergleichen Trennscheibe (26) fluchtet.

8. Vorrichtung nach Anspruch 7, **dadurch gekennzeichnet, dass** die Begrenzungsscheiben (24, 25) jeweils in einer Ausbuchtung (27, 28) angeordnet sind, die außenseitig des jeweiligen Abgasdurchlasskanals (5', 6') in einem die Lagerbohrung (21) axial begrenzenden Gehäuseboden oder Deckel (20a) ausgebildet ist, dass die Zentralachse (23) des Drehschiebers (19) einenendes mit einem außen vorspringenden Abschnitt (23') in einer äußeren Lagerbohrung im Boden oder Deckel (20a) des Drehschieber-Gehäuses (20) sowie andererseits mit einem Abschnitt (23") einer Lagerbohrung in einem die Lagerbohrung (21) verschließenden Deckel (29) gelagert ist, und dass die Zentralachse (23) des Drehschiebers (20) mit ihrem Abschnitt (23") aus dem Drehschiebergehäuse (20) heraus verlängert ist und dort über entsprechende Koppelungsmittel (31, 32) mit einem Stellmotor (33) für den Drehschieber (19) verbunden ist.

9. Vorrichtung nach Anspruch 7, **dadurch gekennzeichnet, dass** jede der Bypassleitungen (14, 15) von der den Drehschieber (19) aufnehmenden Lagerbohrung (21) im Bereich zwischen Trennscheibe (26) und einer der beiden äußeren Begrenzungsscheiben (24, 25) abzweigt.

10. Vorrichtung nach Anspruch 9, **dadurch gekennzeichnet, dass** jede Bypassleitung (14, 15) mit einer Düsenbohrung (14', 15') kommuniziert, die in einer Turbinenwand der Abgasturbine (8) ausgebildet ist, wobei die Düsenbohrungen (14', 15') entweder
a) parallel nebeneinander verlaufend und über je einen zum anderen benachbarten Austritt (14"', 15"'), oder
b) in spitzem Winkel zueinander verlaufend sowie ineinander übergehend und dann einen gemeinsamen Austritt
tangential auf den Außenbereich des Turbinenrades (17) gerichtet in die Turbinenkammer (18) ausmünden.

11. Vorrichtung nach Anspruch 10, **dadurch gekennzeichnet, dass** die beiden Düsenbohrungen (14', 15') in einer zur Achse des Turbinenrades (17) senkrechten Ebene in einer die Turbinenkammer (18) unterteilenden Leitwand ausgebildet sind.

12. Vorrichtung nach Anspruch 10, **dadurch gekennzeichnet, dass** jede Bypassleitung (14', 15') einen drehschiebergehäuseinternen Abschnitt (14a, 15a) aufweist, an das sich ein extern des Drehschieber-Gehäuses (20) angeordnetes Leitungsstück (14b, 15b) anschließt, das mit der nachfolgenden zugehörigen Düsenbohrung (14', 15') kommuniziert.

13. Vorrichtung nach Anspruch 10, **dadurch gekennzeichnet, dass** jede der beiden Bypassleitungen (14, 15) mit ihrer endseitigen Düsenbohrung (14', 15') durch eine lineare Bohrung gebildet ist, welche Bohrungen in einem Wandvorsprung (43) ausgebildet sind, außerdem am Drehschieber-Gehäuse (20) und Turbineneinlass (7) die den Drehschieber (19) aufnehmende Lagerbohrung (21) randseitig tangential durchqueren und eingangsseitig zur Vermeidung eines Abgasaustritts durch Verschlussstopfen (44) verschlossen sind.

14. Vorrichtung nach einem der vorhergehenden Ansprüche, **dadurch gekennzeichnet, dass** der Drehschieber (19) durch eine Stellvorrichtung (33), an die er mittelbar über geeignete Organe (31, 32) angekoppelt ist, in seine verschiedenen Einstellpositionen verdrehbar ist, und dass die Stellvorrichtung (33) durch einen geeigneten elektropneumatischen oder elektrischen Motor gebildet ist und ihre Steuerbefehle von einer Steuerelektronik erhält, bei der es sich um ein selbstständiges Gerät oder um einen Bordcomputer oder den Fahrzeugführungsrechner des Fahrzeugs handelt, wobei die Steuerelektronik eine Vielzahl von aktuellen Fahrbetriebs- und Motorbetriebsparametern einschließlich fahrerseitig eingesteuerten Brems- und Beschleunigungssignalen zugeführt erhält und diese Istwerte per Programm anhand eingespeicherter Sollwerte zu entsprechenden Stellbefehlen für den Stellmotor (33) verarbeitet, die dieser dann in entsprechende Drehschieber-Einstellungen umsetzt.

## Claims

1. Apparatus for increasing the braking performance of a multiple-cylinder internal combustion engine (1) of a vehicle during the engine braking mode, which apparatus has an engine braking apparatus inside the engine, at least one exhaust-gas turbocharger (4) with an exhaust-gas turbine (8) and a charge-air compressor (3), and two exhaust-gas collection sections (5, 6), via which in each case the exhaust gas which is emitted from a plurality of cylinders can be fed in a manner which is combined in groups to the exhaust-gas turbine (8) via the inlet (7; 7a, 7b) of the latter, it being possible for each exhaust-gas collecting section (5, 6) to be shut off completely by a shut-off member (10, 11) during an engine braking mode, furthermore a bypass line (14, 15) which can be opened and closed in a controlled manner by a control member (12, 13) branching off from that region of each exhaust-gas collecting section (5, 6) which can be shut off, the end region of which bypass line (14, 15), which is formed in a turbine housing wall in the manner of a nozzle hole (14', 15'), opens into the turbine chamber (18) in a manner which is directed at least approximately tangentially onto the outer region of the turbine wheel (17), it thus being possible during an engine braking mode for two exhaust-gas part streams to be branched off via the bypass lines (14, 15) from the exhaust gas which has accumulated in the shut-off exhaust-gas collecting sections (5, 6), and the said two exhaust-gas part streams then striking the rotor blades of the turbine wheel (17) via the nozzle holes (14', 15') at high pressure and high speed, either in the form of two exhaust-gas jets or combined to form one exhaust-gas jet, and it being possible in such a way for the turbocharger (4) to be driven in an accelerated manner and, resulting from this, it being possible for compressed air to be fed to the combustion chambers of the internal combustion engine (1), in a manner which is active there to increase the braking performance, **characterized in that** the two exhaust-gas section shut-off members (10, 11) and the two bypass-line control members (12, 13) are realized in a functionally and structurally combined manner by a rotary slide (19) which is installed in a rotary-slide housing (20) which is arranged in the exhaust-gas stream upstream of the turbine chamber (18), **in that** the two bypass lines (14, 15) branch off laterally from a bearing hole (21) which is inside the housing and receives the rotary slide (19), and **in that** the rotary slide (19) has a peripheral control track (22, 22c), with which at least the following switching states can be brought about in different setting positions, namely
a) during an engine braking mode, both exhaust-gas collecting sections (5, 6, 5', 6') can be shut off and, at the same time, the inlet cross sections (14", 15") of both bypass lines (14, 15) can be opened completely or partially, and
b) during the normal engine mode, both exhaust-gas collecting sections (5, 6, 5', 6') are switched to allowing passage and, at the same time, the two bypass lines (14, 15) are shut off.

2. Apparatus according to Claim 1, **characterized in that** the peripheral control track (22, 22c) on the rotary slide (19) has such an arrangement and arc length and **in that** the bypass lines (14, 15) branch off with their inlet cross sections (14", 15") at such positions and with such a size from the receiving hole (21) for the rotary slide (19) in the rotary-slide housing (20) that the following switching states can be brought about by means of the rotary slide (19) in its different setting positions, namely
a) in the engine braking mode
a1) each exhaust-gas collecting section (5, 6, 5', 6') is either
a11) shut off completely or
a12) is opened for partial passage,
a2) the inlet cross section (14", 15") of each bypass line (14, 15), in the case of exhaust-gas collecting sections (5, 6, 5', 6') which are shut off at the same time, is either
a21) opened completely or
a22) is opened partially to a greater or lesser extent in a regulated way for influencing the braking performance, and
b) in the normal engine mode
b1) each exhaust-gas section (5, 6, 5', 6') is either
b11) opened to full passage or
b12) is set to partial passage in a regulated way for accelerations of the turbocharger (4), and
b2) the inlet cross section (14", 15") of each bypass line (14, 15) is either
b21) shut off completely during the operating settings b11) and b12) or
b22) is opened partially during the operating phase b12).

3. Apparatus according to Claim 1, **characterized in that** the rotary-slide housing (20) which receives the rotary slide (19) in its bearing hole (21) is formed at the turbine-side end region of the exhaust-gas collecting sections (5, 6) close to a connecting flange (39), with which common connecting flange (39) the two exhaust-gas collecting sections (5, 6) which are adjacent to one another there can be flange-connected to a corresponding connecting flange (35) at the inlet (7) of the turbine housing (8').

4. Apparatus according to Claim 1, **characterized in that** the rotary-slide housing (20) which receives the rotary slide (19) in its bearing hole (21) is formed in the correspondingly lengthened inlet region (7) of the turbine housing (8'), to the outer connecting flange (36) of which the two exhaust-gas collecting sections (5, 6) are flange-connected via a common connecting flange (37) which exists on the end side thereof.

5. Apparatus according to Claim 1, **characterized in that** the rotary-slide housing (20) which receives the rotary slide (19) in its bearing hole (21) has two exhaust-gas passage channels (5', 6'), which communicate with the two exhaust-gas collecting sections (5, 6) and the turbine inlet (7), and in each case one connecting flange (38, 39) on the exhaust-section side and on the turbine-inlet side, via which connecting flanges (38, 39) the rotary-slide housing (20) is installed between a flange (40) which exists on the exhaust-section end side and a flange (39) which exists on the turbine-inlet side.

6. Apparatus according to one of the preceding claims, **characterized in that** the rotational axis of the rotary slide (19) is arranged in a plane which passes through the centre of the two exhaust-gas collecting sections (5, 6) which extend adjacently to one another and in parallel in their turbine-side end region and of the adjacent turbine inlet (7), or in a plane which is parallel to the former plane.

7. Apparatus according to one of the preceding claims, **characterized in that** the rotary slide (19) has a central pin (23) and, arranged fixedly thereon coaxially, two lateral limiting discs (24, 25) and, between them, a dividing disc (26) which divides one exhaust-gas stream (5, 6, 5', 6') from the other within the bearing hole (21) for the rotary slide (19), the peripheral control track (22) of the rotary slide (19) extending with a part section (22a, 22b) between the dividing disc (26) and each of the limiting discs (24, 25), and in the process the outer arc face (22c) of the control track (22) being aligned with the radial outer faces (24', 25') of the limiting discs (24, 25) and the radial outer face (26') of the dividing disc (26) which has the same diameter as the said limiting discs (24, 25).

8. Apparatus according to Claim 7, **characterized in that** the limiting discs (24, 25) are arranged in each case in a bulge (27, 28) which is formed on the outside of the respective exhaust-gas passage channel (5', 6') in a cover (20a) or housing base which delimits the bearing hole (21) axially, **in that** the central pin (23) of the rotary slide (19) is mounted at one end with an outwardly projecting section (23') in an outer bearing hole in the base or cover (20a) of the rotary-slide housing (20), and is mounted at the other end with a section (23") of a bearing hole in a cover (29) which closes the bearing hole (21), and **in that** the central pin (23) of the rotary slide (19) is extended with its section (23") out of the rotary-slide housing (20) and is connected there via corresponding coupling means (31, 32) to an actuating motor (33) for the rotary slide (19).

9. Apparatus according to Claim 7, **characterized in that** each of the bypass lines (14, 15) branches off from the bearing hole (21) which receives the rotary slide (19), in the region between the dividing disc (26) and one of the two outer limiting discs (24, 25).

10. Apparatus according to Claim 9, **characterized in that** each bypass line (14, 15) communicates with a nozzle hole (14', 15') which is formed in a turbine wall of the exhaust-gas turbine (8), the nozzle holes (14', 15') opening into the turbine chamber (18) tangentially in a manner which is directed onto the outer region of the turbine wheel (17), the said nozzle holes (14', 15') either
a) extending parallel next to one another and via in each case one outlet (14"', 15'") which is adjacent to the other, or
b) extending at an acute angle with respect to one another and merging into one another and then having a common outlet.

11. Apparatus according to Claim 10, **characterized in that** the two nozzle holes (14', 15') are formed in a guide wall which divides the turbine chamber (18), in a perpendicular plane with respect to the axis of the turbine wheel (17).

12. Apparatus according to Claim 10, **characterized in that** each bypass line (14, 15) has a section (14a, 15a) which is inside the rotary-slide housing and is adjoined by a line section (14b, 15b) which is arranged outside the rotary-slide housing (20) and communicates with the following associated nozzle hole (14', 15').

13. Apparatus according to Claim 10, **characterized in that** each of the two bypass lines (14, 15) with its end-side nozzle hole (14', 15') is formed by a linear hole, which holes are formed in a wall projection (43), moreover tangentially cross, on the edge side, the bearing hole (21) which receives the rotary slide (19) on the rotary-slide housing (20) and the turbine inlet (7), and are closed on the inlet side by closure plugs (44) in order to avoid the discharge of exhaust gas.

14. Apparatus according to one of the preceding claims, **characterized in that** the rotary slide (19) can be rotated into its various setting positions by an actuating apparatus (33), to which it is coupled indirectly via suitable members (31, 32), and **in that** the actuating apparatus (33) is formed by a suitable electropneumatic or electric motor and receives its control commands from a control electronic means which is an autonomous unit or an on-board computer or the vehicle control computer of the vehicle, the control electronic means receiving a multiplicity of actual driving-operation and engine-operation parameters, including braking and accelerating signals input by the driver, and processing these actual values per program using stored setpoint values into corresponding actuating commands for the actuating motor (33), which actuating commands the said actuating motor (33) then converts into corresponding rotary-slide settings.

## Revendications

1. Dispositif d'augmentation de la puissance au frein d'un moteur à combustion interne polycylindrique (1) d'un véhicule pendant le fonctionnement en frein-moteur, qui présente un dispositif de frein-moteur interne au moteur, au moins un turbocompresseur à gaz d'échappement (4) avec une turbine à gaz d'échappement (8) et un compresseur d'air d'admission (3), ainsi que deux lignes de collecte de gaz d'échappement (5, 6), par lesquelles les gaz d'échappement expulsés respectivement hors de plusieurs cylindres, rassemblés par groupes, peuvent être envoyés à la turbine à gaz d'échappement (8) par l'entrée (7; 7a, 7b) de celle-ci, dans lequel chaque ligne de collecte de gaz d'échappement (5, 6) peut être complètement fermée par un organe d'arrêt (10, 11) pendant un fonctionnement en frein-moteur, en outre une conduite de dérivation (14, 15) pouvant être ouverte ou fermée au moyen d'un organe de commande (12, 13) part de la région pouvant être fermée de chaque ligne de collecte de gaz d'échappement (5, 6) et dont une région d'extrémité configurée à la manière d'un alésage de tuyère (14', 15') dans une paroi de l'enceinte de la turbine débouche dans la chambre de turbine (18) en direction au moins approximativement tangentielle à la région extérieure de la roue de turbine (17), dans lequel, pendant un fonctionnement en frein-moteur, deux flux partiels de gaz d'échappement peuvent être déviés par les conduites de dérivation (14, 15) hors des gaz d'échappement accumulés dans les lignes de collecte de gaz d'échappement fermées (5, 6) et ceux-ci arrivent alors par les alésages de tuyères (14', 15') sur les aubes mobiles de la roue de turbine (17), sous haute pression et à grande vitesse, soit sous la forme de deux flux de gaz d'échappement soit après réunion en un seul flux de gaz d'échappement et le turbocompresseur (4) peut ainsi être entraîné de manière accélérée et l'air comprimé qui en résulte peut être envoyé aux chambres de combustion du moteur à combustion interne (1) - opérant ainsi une augmentation de la puissance au frein -, **caractérisé en ce que** les deux organes d'arrêt (10, 11) des lignes de collecte de gaz d'échappement et les deux organes de commande (12, 13) des conduites de dérivation, rassemblés au point de vue du fonctionnement et de la construction, sont réalisés par une vanne rotative (19), qui est installée dans un boîtier de vanne rotative (20) disposé dans le flux de gaz d'échappement en amont de la chambre de turbine (18), **en ce que** les deux conduites de dérivation (14, 15) partent latéralement d'un alésage de palier (21) contenant la vanne rotative (19) et interne au boîtier, et **en ce que** la vanne rotative (19) présente une coulisse de commande périphérique (22, 22c), avec laquelle au moins les états de commutation suivants peuvent être atteints dans différentes positions de réglage:
a) pendant un fonctionnement en frein-moteur, les deux lignes de collecte de gaz d'échappement (5, 6, 5', 6') peuvent être fermées et en même temps les sections transversales d'entrée (14", 15") des deux conduites de dérivation (14, 15) peuvent être entièrement ou partiellement dégagées, et
b) pendant un fonctionnement normal du moteur, les deux lignes de collecte de gaz d'échappement (5, 6, 5', 6') sont en position ouverte et en même temps les deux conduites de dérivation (14, 15) sont fermées.

2. Dispositif selon la revendication 1, **caractérisé en ce que** la coulisse de commande périphérique (22, 22c) sur la vanne rotative (19) présente un tel agencement et une telle longueur d'arc et **en ce que** les conduites de dérivation (14, 15), avec leurs sections transversales d'entrée (14", 15"), partent en des endroits tels et avec une grandeur telle, de l'alésage de réception (21) pour la vanne rotative (19) dans le boîtier de vanne rotative (20), que les états de commutation suivants peuvent être atteints, au moyen de la vanne rotative (19) dans différentes positions de réglage de celle-ci, notamment:
a) en fonctionnement en frein-moteur
a1) chaque ligne de collecte de gaz d'échappement (5, 6, 5', 6') est soit
a11) complètement fermée, soit
a12) dégagée pour un passage partiel,
a2) la section transversale d'entrée (14", 15") de chaque conduite de dérivation (14, 15) est, avec les lignes de collecte de gaz d'échappement (5, 6, 5', 6') en même temps fermées, soit
a21) complètement dégagée, soit
a22) partiellement dégagée plus ou moins fortement en mode régulé pour influencer la puissance au frein, et
b) en fonctionnement normal du moteur
b1) chaque ligne de gaz d'échappement (5, 6, 5', 6') est soit
b11) dégagée à passage total, soit
b12) réglée à passage partiel en mode régulé pour des accélérations du turbocompresseur (4), et
b2) la section transversale d'entrée (14", 15") de chaque conduite de dérivation (14, 15) est soit
b21) complètement fermée pendant les réglages de fonctionnement b11) et b12), soit
b22) partiellement dégagée pendant la phase de fonctionnement b12).

3. Dispositif selon la revendication 1, **caractérisé en ce que** le boîtier de vanne rotative (20) contenant la vanne rotative (19) dans son alésage de palier (21) est configuré, près de la région d'extrémité côté turbine des lignes de collecte de gaz d'échappement (5, 6), en une bride de raccordement (39), bride de raccordement commune (39) avec laquelle les deux lignes de collecte de gaz d'échappement (5, 6) voisines l'une de l'autre à cet endroit peuvent être assemblées à une bride de raccordement correspondante (35) à l'entrée (7) de l'enceinte de turbine (8')

4. Dispositif selon la revendication 1, **caractérisé en ce que** le boîtier de vanne rotative (20) contenant la vanne rotative (19) dans son alésage de palier (21) est réalisé dans la région d'entrée (7) dûment prolongée de l'enceinte de turbine (8'), à la bride de raccordement extérieure (36) de laquelle les deux lignes de collecte de gaz d'échappement (5, 6) sont assemblées par une bride de raccordement commune (37) prévue côté extrémité sur celles-ci.

5. Dispositif selon la revendication 1, **caractérisé en ce que** le boîtier de vanne rotative (20) contenant la vanne rotative (19) dans son alésage de palier (21) présente deux canaux de passage de gaz d'échappement (5', 6') communiquant avec les deux lignes de collecte de gaz d'échappement (5, 6) et l'entrée de turbine (7) ainsi que, côté lignes de gaz d'échappement et côté entrée de turbine, respectivement une bride de raccordement (38, 39), brides de raccordement (38, 39) par lesquelles le boîtier de vanne rotative (20) est installé entre des brides (39, 40) se trouvant respectivement côté ligne de gaz d'échappement et côté entrée de turbine.

6. Dispositif selon l'une quelconque des revendications précédentes, **caractérisé en ce que** l'axe de rotation de la vanne rotative (19) est disposé dans un plan passant par le centre des deux lignes de collecte de gaz d'échappement (5, 6) s'étendant à proximité et parallèlement l'une à l'autre dans leur région d'extrémité côté turbine et de l'entrée de turbine (7) qui s'y raccorde ou dans un plan parallèle à celui-ci.

7. Dispositif selon l'une quelconque des revendications précédentes, **caractérisé en ce que** la vanne rotative (19) présente un axe central (23) ainsi que deux disques de limitation latéraux (24, 25) disposés en position axiale solidairement à celui-ci et entre ceux-ci un disque de séparation (26), qui sépare l'un de l'autre les flux de gaz d'échappement (5, 6, 5', 6') à l'intérieur de l'alésage de palier (21) pour la vanne rotative (19), dans lequel la coulisse de commande périphérique (22) de la vanne rotative (19) s'étend avec une portion partielle (22a, 22b) entre le disque de séparation (26) et chacun des disques de limitation (24, 25) et la surface courbe extérieure (22c) de la coulisse de commande (22) est en l'occurrence alignée avec les surfaces extérieures radiales (24', 25') des disques de limitation (24, 25) et avec la surface extérieure radiale (26') du disque de séparation (26) de même diamètre que ceux-ci.

8. Dispositif selon la revendication 7, **caractérisé en ce que** les disques de limitation (24, 25) sont disposés respectivement dans un évidement (27, 28), qui est réalisé côté extérieur du canal respectif de passage de gaz d'échappement (5', 6') dans un fond de boîtier ou un couvercle (20a) limitant axialement l'alésage de palier (21), **en ce que** l'axe central (23) de la vanne rotative (19) est supporté à une extrémité avec une partie saillante extérieurement (23') dans un alésage de palier extérieur dans le fond ou le couvercle (20a) du boîtier de vanne rotative (20) ainsi qu'à l'autre extrémité avec une partie (23") d'un alésage de palier dans un couvercle (29) fermant l'alésage de palier (21), et **en ce que** l'axe central (23) de la vanne rotative (19) est prolongé avec sa partie (23") hors du boîtier de vanne rotative (20) et est relié à cet endroit à un moteur de réglage (33) pour la vanne rotative (19) à l'aide de moyens de couplage correspondants (31, 32).

9. Dispositif selon la revendication 7, **caractérisé en ce que** chacune des conduites de dérivation (14, 15) part de l'alésage de palier (21) contenant la vanne rotative (19) dans la région située entre le disque de séparation (26) et un des deux disques de limitation extérieurs (24, 25).

10. Dispositif selon la revendication 9, **caractérisé en ce que** chaque conduite de dérivation (14, 15) communique avec un alésage de tuyère (14', 15'), qui est réalisé dans une paroi de turbine de la turbine à gaz d'échappement (8), dans lequel les alésages de tuyère (14', 15') débouchent dans la chambre de turbine (18) en direction tangentielle à la région extérieure de la roue de turbine (17),
a) soit en s'étendant parallèlement l'un à côté de l'autre et respectivement par une sortie (14"', 15"') proche l'une de l'autre,
b) soit en s'étendant sous un angle aigu l'un par rapport à l'autre et se rejoignant pour former une sortie commune.

11. Dispositif selon la revendication 10, **caractérisé en ce que** les deux alésages de tuyère (14', 15') sont formés dans un plan perpendiculaire à l'axe de la roue de turbine (17) dans une paroi de déviation divisant la chambre de turbine (18).

12. Dispositif selon la revendication 10, **caractérisé en ce que** chaque conduite de dérivation (14, 15) présente une partie (14a, 15a) interne au boîtier de la vanne rotative, à laquelle se raccorde un élément de conduite (14b, 15b) disposé à l'extérieur du boîtier de vanne rotative (20), qui communique avec l'alésage de tuyère correspondant qui suit (14', 15').

13. Dispositif selon la revendication 10, **caractérisé en ce que** chacune des conduites de dérivation (14, 15) avec son alésage de tuyère côté extrémité (14', 15') est formé par un alésage linéaire, alésages qui sont réalisés dans une saillie de paroi (43), par ailleurs, sur le boîtier de vanne rotative (20) et l'entrée de turbine (7), traversent tangentiellement du côté du bord l'alésage de palier (21) contenant la vanne rotative (19) et sont fermés côté entrée par des bouchons de fermeture (44) pour éviter une sortie de gaz d'échappement.

14. Dispositif selon l'une quelconque des revendications précédentes, **caractérisé en ce que** la vanne rotative (19) peut tourner dans ses différentes positions de réglage au moyen d'un dispositif de réglage (33), auquel elle est couplée indirectement par des organes appropriés (31, 32), et **en ce que** le dispositif de réglage (33) est formé par un moteur électropneumatique ou électrique approprié et reçoit ses instructions de commande d'une électronique de commande, qui est un appareil autonome ou un ordinateur de bord ou le calculateur de conduite du véhicule, dans lequel l'électronique de commande reçoit une multitude de paramètres instantanés de fonctionnement de roulage et de fonctionnement du moteur y compris des signaux de freinage et d'accélération envoyés introduits côté conducteur et transforme ces valeurs instantanées par un programme à l'aide de valeurs de consigne mémorisées en instructions de réglage pour le moteur de réglage (33), que ce dernier convertit en réglages correspondants de la vanne rotative.
